# FASCICULE DE BREVET EUROPEEN

(11) **EP 1 827 182 B1**
(45) Date de publication et mention de la délivrance du brevet: **10.12.2008**
(21) Numéro de dépôt: 05824515.0
(22) Date de dépôt: 02.12.2005
(51) Int. Cl.: A47J 31/40

(54) **DISTRIBUTEUR AUTOMATIQUE DE BOISSONS INFUSEES COMPORTANT UN DISPOSITIF D'EXPULSION DE PRODUIT INFUSE**
Getränkeautomat für Brühgetränke mit Vorrichtung zum Auswerfen des aufgebrühten Produktes
AUTOMATIC INFUSED BEVERAGE DISPENSER COMPRISING AN INFUSED PRODUCT EJECTING DEVICE

(30) Priorité: 06.12.2004 FR 0412941; 07.04.2005 FR 0503491
(43) Date de publication de la demande: 05.09.2007
(73) Titulaire: SEB SA, 69130 Ecully (FR)
(72) Inventeur: MORIN, Gilles, 14210 Saint Honorine du Fay (FR); MIH, Séverine, F-72600 Mamers (FR)
(74) Mandataire: Kiehl, Hubert
(86) Numéro de dépôt international: PCT/FR2005/003020
(87) Numéro de publication internationale: WO 2006/061494

(56) Documents cités:
- EP-A- 0 117 583
- EP-A- 0 270 141
- WO-A-01/43610
- FR-A- 2 860 408
- US-A- 5 255 594
- US-A- 5 406 882
- US-A- 5 479 848

## Description

La présente invention est relative à un appareil du type distributeur automatique de boissons infusées à partir de produit alimentaire pulvérulent d'infusion ou de percolation, tels le café moulu, le thé, le chocolat, etc. en vrac ou pré-conditionné dans des capsules.

Un appareil de préparation et distribution de boissons chaudes comprend généralement un réservoir d'eau froide, une pompe électrique, un ensemble formant chaudière et une tête d'infusion apte à recevoir une quantité prédéterminée de produit pulvérulent, voire une capsule souple ou rigide contenant un tel produit. L'eau chaude en provenance de la chaudière est envoyée sous pression à l'intérieur de la tête d'infusion, la boisson obtenue étant ensuite orientée vers un récipient collecteur. En fin de cycle d'infusion, le reste de produit infusé ou la capsule usagée sont évacués et la tête d'infusion est ouverte afin de pouvoir y introduire à nouveau le produit d'infusion. Dans ce but, les distributeurs automatiques de boissons sont généralement munis d'un dispositif d'expulsion automatique du produit infusé, galette de marc de café ou capsule, dispositif qui est entraîné par des mécanismes internes à l'appareil.

Le document WO 99/12455 décrit un groupe automatique de préparation de boissons infusées comportant un dispositif d'expulsion de galettes de marc de café. Ce groupe automatique comporte un corps renfermant une chambre d'infusion d'axe vertical présentant un débouché, comportant un plateau expulseur monté mobile dans la chambre, et recevant un piston infuseur monté mobile verticalement, ainsi qu'un dispositif d'expulsion de galettes de marc lorsqu'elles sont poussées en position haute de la chambre par le plateau expulseur. Le dispositif d'expulsion comprend un tiroir de déchargement formant raclette monté coulissant horizontalement, au niveau du débouché de la chambre d'infusion, sur des glissières pratiquées sur le bord du débouché. La mise en mouvement du tiroir est assurée par un mécanisme de transformation du mouvement du piston infuseur, notamment une tringlerie, solidaire de la tige du piston et comportant une protubérance qui agit sur une biellette articulée dont l'une des extrémités est reliée à une tige de poussée du tiroir de déchargement. Le retour en position de retrait du tiroir est assuré par un ressort de rappel. Ce dispositif, bien qu'efficace pour l'expulsion de la galette de marc, présente comme principal inconvénient celui de nécessiter de nombreuses pièces réalisées avec des tolérances de fabrication très strictes, sans lesquelles le tiroir est sujet à des blocages fréquents dans ses glissières.

Par ailleurs, le document FR 2 594 671 décrit une machine à café automatique comportant une chambre d'infusion verticale à fond mobile et recevant un piston de tassage supérieur monté mobile verticalement. La chambre d'infusion appartient à un bloc fixe qui supporte également le bloc moteur d'entraînement de deux platines, supérieure et inférieure, montées coulissantes sur des colonnes verticales. La platine supérieure porte le piston de tassage et la platine inférieure porte la tige du fond mobile de la chambre. Les platines sont entraînées en mouvement par des crémaillères verticales qui reçoivent le mouvement d'un pignon monté sur l'arbre de sortie du moteur. Ce pignon entraîne également en translation une crémaillère horizontale dont l'une des extrémités est en butée contre une protubérance transversale d'une racle montée à balayage latéral au-dessus de la chambre d'infusion. La racle est entraînée par la crémaillère horizontale en un mouvement de balayage latéral angulaire à partir d'un axe d'articulation fixe constitué par l'une des colonnes de guidage des platines. De par son mouvement de balayage latéral, la racle permet l'évacuation du gâteau de marc infusé remonté en fin de cycle par l'élévation du fond mobile de la chambre d'infusion. Le retour en position initiale de la racle se fait sous la force d'un ressort de rappel. Cette machine automatique décrit, certes, un dispositif d'expulsion par balayage à mouvement pivotant plus fiable que le précédent, mais au prix d'un actionnement mécanique à moteur et plusieurs mécanismes pignon-crémaillère qui rendent la construction complexe et encombrante. De surcroît, le ressort de rappel peut se bloquer en fonctionnement et sa force sollicite davantage le moteur d'actionnement de la machine.

Le document EP 0 270 141 décrit une machine à café automatique comportant une plaquette mobile en pivotement avec le piston et entraînant une lame de raclage pour l'expulsion des galettes de marc de café. Toutefois, la lame de raclage pivote autour d'un axe parallèle au plan du débouché et non pas perpendiculaire à celui-ci.

Le document EP 0 117 583 décrit un mécanisme automatique pour la production de café espresso, mais où le mécanisme d'expulsion du marc comporte un bras éjecteur monté pivotant autour d'un axe parallèle au dessus du débouché de la chambre d'infusion. L'actionnement du piston presseur, qui déplace à son tour le bras éjecteur, est fait par un mécanisme d'entraînement complexe et encombrant.

Le document WO 01/43610 décrit une machine à café automatique comportant un groupe d'infusion où un plateau filtre est monté mobile à l'intérieur d'une chambre d'infusion pour permettre l'éjection de la mouture par un éjecteur. Toutefois, aucune indication n'est donnée dans ce document quant à la structure ou au fonctionnement de l'éjecteur. -

Le document US 5 255 594 décrit une machine à café automatique comprenant une lame de raclage de la mouture, lame entraînée par une plaquette qui se déplace avec le piston en un mouvement de pivotement autour d'un axe parallèle au plan du débouché de la chambre d'infusion.

Le document US 5 479 848 décrit une machine à café automatique comportant un dispositif d'éjection de marc de café par pivotement d'un bras articulé autour d'un axe perpendiculaire au plan du débouché de la chambre d'infusion. Toutefois, l'actionnement en pivotement dans un plan vertical du bras articulé est fait par une rainure d'une tige mobile horizontalement avec la chambre de remplissage, et non pas avec le piston ou la chambre d'infusion.

Le document US 5 406 882 décrit une machine de préparation de boissons infusées comportant un bras d'expulsion du produit infusé animé d'un mouvement de pivotement latéral au dessus du débouché de la chambre d'infusion, en étant entraîné par une pièce mobile avec la chambre d'infusion. Toutefois, le bras d'expulsion est entraîné uniquement lors de son mouvement de retour par le déplacement de la chambre, son mouvement aller utilisant l'énergie d'un ressort.

Le but de la présente invention est de remédier aux inconvénients précités et de proposer un distributeur automatique de boissons infusées de construction et fonctionnement simplifiés, tout en étant particulièrement fiable.

Un autre but de l'invention est un distributeur automatique de boissons infusées apte à assurer l'expulsion d'une galette de marc infusée ou d'une capsule usagée de manière rapide et fiable dans le temps, pouvant être industrialisé pour un coût moindre.

Ces buts sont atteints avec un distributeur automatique de boissons infusées à partir de poudre de café ou de capsules pré-conditionnées comprenant, à l'intérieur d'un boîtier :
- un groupe d'infusion comportant une chambre d'infusion présentant un fond et un débouché et étant apte à recevoir un piston presseur, des moyens d'actionnement en un mouvement de coulissement relatif dudit piston presseur et/ou de ladite chambre d'infusion l'un par rapport à l'autre, à partir d'une position de repos dans laquelle le piston se trouve à l'extérieur de la chambre jusqu'à une position de travail à l'intérieur de la chambre d'infusion, et un plateau expulseur monté mobile dans ladite chambre d'infusion, entre le fond et le débouché de cette dernière au moyen d'un dispositif d'entraînement;
- ainsi qu'un dispositif d'expulsion de galettes de marc ou de capsules infusées, lorsque ledit plateau expulseur est amené au niveau du débouché de la chambre d'infusion, comportant un bras éjecteur animé d'un mouvement alternatif au-dessus du débouché de la chambre d'infusion, le bras éjecteur est monté rotatif autour d'un axe de pivotement perpendiculaire au plan du débouché de la chambre d'infusion,
du fait que le bras éjecteur est entraîné dans son mouvement alternatif par une seule came mobile avec le piston presseur ou avec la chambre d'infusion dont le profil est tel qu'elle assure le déplacement en double sens du bras éjecteur.

Un tel distributeur de boissons infusées peut être une machine à café qui confectionne un café du type espresso par envoi d'eau chaude sous pression à travers la mouture de café contenue dans la chambre ou à l'intérieur d'une capsule contenant du café, puis évacue l'infusion obtenue à l'extérieur de l'appareil, où elle est recueillie dans une tasse. Un tel appareil comporte de plus un dispositif d'expulsion de la galette de marc infusée ou de la capsule usagée lorsqu'elle a été amenée au niveau du débouché de la chambre d'infusion par un plateau expulseur, monté coulissant à l'intérieur de cette dernière en étant actionné en fin de cycle d'infusion par un dispositif d'entraînement. Le dispositif d'expulsion comporte un bras éjecteur qui effectue des mouvements périodiques, d'aller-retour au-dessus du débouché de la chambre d'infusion de manière à pousser la galette ou la capsule usagée pour l'envoyer vers un bac de récupération et revenir ensuite dans une position de retrait par rapport au débouché de la chambre. Le bras éjecteur peut effectuer un mouvement de translation ou de rotation au-dessus du débouché de la chambre d'infusion, mouvement qui peut être parallèle ou tangentiel au plan du débouché.

Selon l'invention, l'entraînement du bras éjecteur dans ses déplacements aller et retour, est fait par une came à double action mobile avec le piston ou avec la chambre d'infusion. Ceci permet déjà de simplifier la construction des mécanismes d'entraînement du dispositif d'expulsion en les remplaçant par une seule came qui n'a pas besoin de moyens d'entraînement propres, car elle est solidaire des pièces en mouvement de coulissement, notamment le piston presseur ou la chambre d'infusion. De surcroît, le profil de cette came est tel qu'elle assure l'entraînement en un mouvement en double sens, aller et retour, du bras éjecteur, ce qui permet d'éliminer tout moyen de rappel, notamment les ressorts encombrants, sujets à des blocages et consommateurs d'énergie.

Ainsi, une même pièce est apte à assurer tous les déplacements du bras éjecteur, de manière simple et très fiable en fonctionnement.

Avantageusement selon l'invention, ledit bras éjecteur est monté rotatif autour d'un axe de pivotement perpendiculaire au plan du débouché de la chambre d'infusion.

On aurait pu, certes, envisager un bras éjecteur à mouvement de tiroir coulissant au-dessus du débouché de la chambre d'infusion, ou encore un bras éjecteur pivotant autour d'un axe parallèle au plan du débouché, ayant donc un mouvement tangentiel. On préfère toutefois un bras éjecteur pivotant autour d'un axe transversal au plan du débouché, ceci assurant un mouvement de stabilité latéral, réalisé parallèlement au plan du débouché. Ceci permet, pour un faible angle de débattement imprimé à l'une des extrémités du bras éjecteur, d'obtenir un balayage large de l'autre extrémité, et, par conséquent de pousser correctement la galette ou la capsule usagée vers un bac de récupération.

De préférence, la came est solidaire du piston presseur et vient en prise directement avec une extrémité d'entraînement du bras éjecteur.

Ainsi, la came est liée au mouvement de coulissement du piston presseur de manière à ce que le bras éjecteur se déplace depuis une position de retrait par rapport au débouché de la chambre en laquelle le piston presseur est à l'intérieur de la chambre d'infusion, à une position finale d'éjection au-dessus du débouché de la chambre d'infusion en laquelle le piston presseur est à l'extérieur de la chambre d'infusion. Cet entraînement du bras éjecteur se fait directement par la came, sans pièce interposée, pour une construction simplifiée.

De préférence, l'axe de pivotement du bras éjecteur est adjacent à l'extrémité d'entraînement du bras.

On agence ainsi l'axe de pivotement du bras éjecteur au plus près de son extrémité d'entraînement afin de réaliser une amplification de son déplacement.

Avantageusement, la came est plate.

On aurait pu, certes, envisager d'utiliser une came à protubérances en relief venant pousser l'extrémité d'entraînement du bras éjecteur. On préfère toutefois une came plate, pouvant être facilement réalisée à partir d'une plaque, entraînée ensuite en un mouvement de translation alternative par le piston mobile, cette came étant alors d'un très faible encombrement.

De préférence, la came présente un chemin de guidage composé de deux parties rectilignes parallèles et reliées entre elles par une partie oblique faisant un angle compris entre 40° et 60° avec les parties rectilignes.

La partie oblique de la came permet un changement de position du bras éjecteur entre sa position de retrait et celle de balayage ou d'expulsion de galette ou de capsule, alors que les parties rectilignes assurent un maintien en position du bras éjecteur lors du mouvement de translation du piston, et donc de la came. L'angle de la partie oblique de la came a été calculé de manière à ce que le déplacement de l'extrémité d'entraînement du bras éjecteur puisse assurer, pour un faible déplacement de la came, un mouvement ample et rapide du bras éjecteur au-dessus du débouché de la chambre d'infusion.

Avantageusement, le chemin de guidage est une nervure sur laquelle se déplace une fourche formant l'extrémité d'entraînement du bras éjecteur.

On aurait pu réaliser l'extrémité d'entraînement du bras éjecteur sous la forme d'un ergot venant s'insérer dans un chemin de guidage en forme de rainure de la came. On préfère toutefois réaliser cette extrémité sous la forme d'une fourche qui entoure une nervure de la came, car une telle fourche résiste mieux aux pollicitations mécaniques subies en fonctionnement, notamment aux frottements et aux changements brusques du sens de déplacement du bras éjecteur.

De préférence, la nervure est revêtue d'une plaque à arêtes arrondies réalisée en une matière plastique.

On peut réaliser la nervure en une plaque métallique que l'on recouvre alors d'une plaque réalisée en une matière plastique et ayant des bords arrondis, sans arêtes vives. Une telle construction assure à la fois une bonne résistance mécanique, et un bon glissement, sans coincement, de la fourche du bras éjecteur par rapport à cette nervure de came, le matériau du revêtement ayant de préférence un faible coefficient de frottement.

Avantageusement, les moyens d'actionnement du piston presseur comprennent un vérin hydraulique comportant une tige de vérin munie à l'une de ses extrémités d'un support qui porte ledit piston presseur et ladite came.

Un tel vérin hydraulique peut être alimenté de manière avantageuse par un circuit hydraulique de dérivation en provenance de la pompe du distributeur, évitant ainsi d'utiliser un moteur électrique, plus encombrant et bruyant. La tige de ce vérin entraîne alors le piston presseur et en même temps, par l'intermédiaire d'un support commun, la came d'actionnement du bras éjecteur.

De préférence, la came est tenue au sein d'un guide éjecteur fixé à l'une des extrémités du support opposée à celle portant le piston presseur.

Le guide éjecteur est un cadre (ouvert ou fermé) qui porte à l'intérieur la came, notamment le chemin de guidage de cette dernière. Ce guide éjecteur est alors fixé au plus loin de la chambre d'infusion afin de permettre un mouvement plus ample du bras éjecteur qui suit la came.

L'invention sera mieux comprise à l'étude du mode de réalisation pris à titre nullement limitatif et illustré dans les figures annexées dans lesquelles :
- la figure 1 est une vue en perspective d'un distributeur automatique selon l'invention, certains de ses composants étant omis pour plus de clarté;
- la figure 2 est une vue en perspective d'un ensemble bras éjecteur et came d'actionnement de ce dernier selon la présente invention.

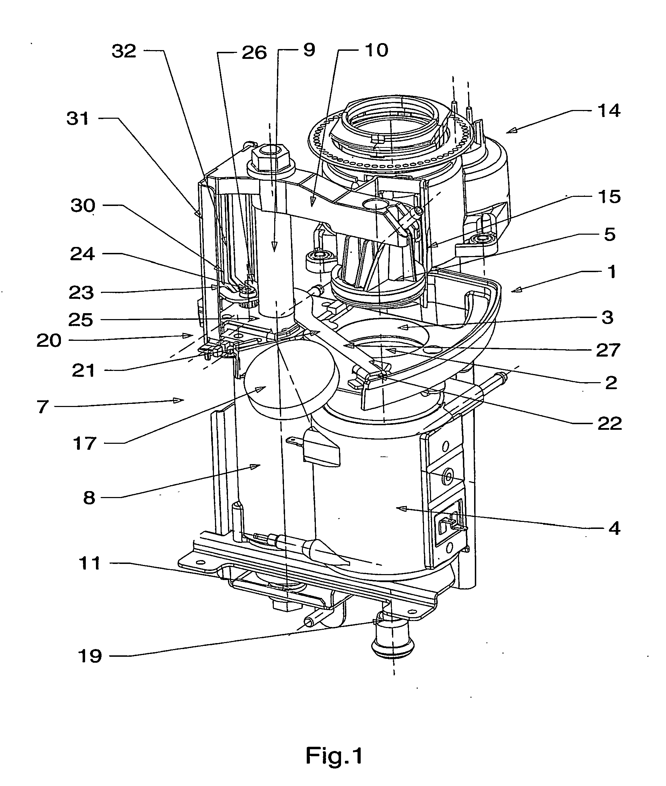

Le distributeur automatique que l'on a représenté en figure 1 est une machine à café automatique apte à réaliser un café espresso et elle comprend un boîtier (non visible sur la figure) dont le fond forme support pour les composants de l'appareil qui seront décrits par la suite, certains des composants de la machine étant enlevés afin de pouvoir plus facilement identifier ses principaux éléments fonctionnels ainsi que ceux représentatifs pour l'invention. Sur la figure 1, un groupe d'infusion 1 comporte une chambre d'infusion 2 en forme de cuve cylindrique apte à recevoir une certaine quantité de café moulu au-dessus d'une paroi inférieure formant filtre pour la mouture. La chambre d'infusion 2 est montée fixe au-dessus d'un bloc thermique 4, d'axe vertical, dont elle constitue le prolongement. Le bloc thermique 4 renferme un circuit d'eau et un élément chauffant électrique non représentés, mais qui peuvent être réalisés selon la description du document WO 99/12456. Le bloc thermique 4 assure l'alimentation en eau chaude de la chambre d'infusion 2.

La chambre d'infusion 2 reçoit un piston presseur 5 qui coulisse verticalement et de manière étanche dans la chambre d'infusion 2 pour compacter la mouture. L'appareil comprend par ailleurs des moyens d'actionnement 7 du piston presseur 5 qui sont constitués, dans l'exemple représenté, par un vérin hydraulique 8 comportant un piston interne prolongé par une tige de vérin 9 reliée au piston presseur 5 par une barre intermédiaire rigide ou support 10. Le vérin hydraulique 8 reçoit un liquide sous pression, en l'occurrence de l'eau, en provenance d'un circuit hydraulique de l'appareil, liquide qui déplace le piston du vérin vers le bas en même temps que le piston presseur 5 qui passe alors d'une position de repos (en partie supérieure de l'appareil) à une position de travail, en descendant verticalement en direction de la chambre d'infusion 2 pour comprimer la mouture. L'eau chaude est alors envoyée par une pompe à travers la mouture et la boisson infusée est ensuite évacuée au travers du piston presseur 5, via un canal interne de ce dernier prolongé par un conduit et des tubulures de sortie (non représentés sur le dessin) qui orientent la boisson vers l'extérieur où elle est recueillie dans une tasse, tel que mieux décrit dans le document WO 99/12456. Le vérin hydraulique 8 ici décrit est un vérin à simple effet, le rappel en position de repos du piston du vérin étant réalisé par un ressort 11 situé en partie inférieure du vérin hydraulique. Un tel vérin est décrit plus en détail dans le document WO 99/12457.

L'appareil comporte également un distributeur de mouture 14 qui comprend un broyeur alimenté par un réservoir de grains de café. Les grains de café tombent à l'intérieur du broyeur et sortent à l'état moulu par un orifice de distribution à travers lequel le café moulu passe dans une goulotte 15 en forme de tremplin qui l'oriente vers la chambre d'infusion 2, à l'intérieur de laquelle il pénètre par un orifice appelé débouché 3 de la chambre. Dans une variante, le café moulu peut être envoyé dans la chambre à partir d'un réservoir de café moulu en passant par un dispositif doseur. Dans une autre variante de l'invention, la chambre d'infusion reçoit une capsule de café pré-conditionné en provenance d'un magasin de capsules.

En fin de cycle de préparation d'infusion, la galette de marc 17 présente dans la chambre d'infusion 2 est poussée en la partie supérieure de la chambre par un plateau expulseur (non visible sur les dessins) monté mobile à l'intérieur de la chambre en étant actionné par une tige d'éjection 19 qui traverse le bloc thermique 4. La tige d'éjection 19 est reliée au plateau expulseur et est actionnée par un dispositif d'entraînement. A titre d'exemple, ce dispositif d'entraînement peut comprendre une tige transversale reliant l'extrémité inférieure de la tige d'éjection 19 verticale au mouvement de rappel exécuté par le ressort 11 du vérin hydraulique 8. Le plateau expulseur effectue alors un même mouvement de coulissement vertical vers le haut que le piston presseur 5 et en même temps que ce dernier, tel que décrit dans le document WO 99/12457.

Un dispositif d'expulsion 20 des galettes de marc 17 est ensuite mis en marche par la machine. A cet effet, le dispositif d'expulsion 20 comprend un bras éjecteur 21 comportant une extrémité dite de stabilité 22 et une partie de raclage 27 qui pousse la galette de marc à partir du débouché 3 de la chambre d'infusion 2 vers un passage débouchant dans un bac à mouture (non représenté sur les figures) qui stocke les galettes usagées.

Selon l'invention, le bras éjecteur 21 est entraîné en mouvement par une came 30 appartenant à un guide éjecteur 31 fixé sur le support 10 de la tige de vérin 9, le guide éjecteur et donc la came 30 étant mobiles avec ce dernier. Le bras éjecteur 21, lui, est monté rotatif autour d'un axe de pivotement 24 vertical porté par un support intermédiaire 25 horizontal fixe de la machine. Une extrémité d'entraînement 23 du bras éjecteur 21 forme une fourche 26 venant en prise avec la came 30.

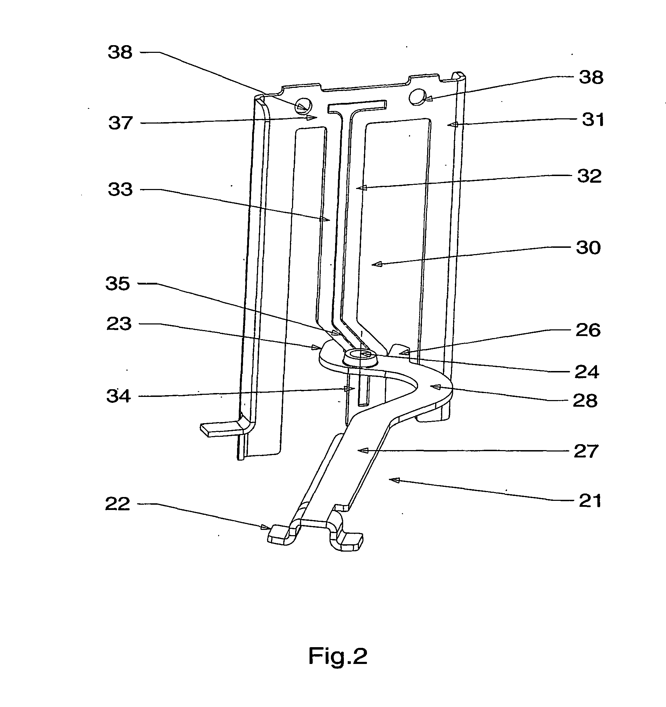

A la figure 2 est mieux visible, à une échelle agrandie, uniquement l'ensemble formé par la came 30 et le bras éjecteur 21. L'extrémité de stabilité 22 du bras éjecteur 21 est constituée par une lame de raclage en forme de U inversé qui prend appui avec frottement sur les bords d'une pièce intermédiaire entourant le débouché 3 de la chambre d'infusion 2. Vu de dessus, le bras éjecteur 21 présente, en partant de son extrémité de stabilité 22, une partie avant rectiligne formant partie de raclage 27 de longueur correspondant à la distance entre la périphérie de la tige de vérin 9 et celle de la chambre d'infusion 2. La partie avant 27 de raclage ou de balayage se prolonge par un coude 28 qui entoure horizontalement la tige de vérin 9. Le coude 28 se termine par la fourche 26 formant l'extrémité d'entraînement 24 du bras éjecteur 21. Le bras éjecteur 21 est donc un levier monté rotatif, dans un plan horizontal, autour de l'axe de pivotement vertical 24. Le bras éjecteur 21 présente, en sa partie de raclage 27, une section transversale en forme de L lui conférant plus de rigidité, le côté latéral du L venant au contact de la galette. Le bras éjecteur 21 est de préférence réalisé par découpage et pliage d'une plaque métallique en acier. La fourche 26 est, elle, réalisée de préférence en un matériau plastique ayant de bonnes propriétés de glissement, par exemple du POM, en étant surmoulée sur la partie métallique du bras éjecteur 21 ou fixée à l'extrémité de cette dernière.

La came 30 présente un chemin de guidage 32 (figure 2) tenu au sein du guide éjecteur 31. Le chemin de guidage 32 présente une première partie rectiligne 33 en partie supérieure reliée à une deuxième partie rectiligne 34 en partie inférieure. La première partie rectiligne 33 est parallèle à la deuxième partie rectiligne 34 à laquelle elle est reliée par une partie oblique 35. Dans l'exemple représenté, la partie oblique 35 fait un angle de 45° avec les parties rectilignes 33,34. Une telle partie oblique permet alors un débattement d'environ 50mm de l'extrémité de stabilité 22 d'un bras éjecteur 21 d'une longueur d'environ 110mm, ce qui assure un balayage complet du débouché 3 de la chambre d'infusion 2 et donc une évacuation complète de la mouture usagée.

Le guide éjecteur 31 a une forme de cadre en U, le chemin de guidage 32 étant relié à une entretoise 37 en partie supérieure du guide éjecteur 31. L'entretoise 37 est munie d'orifices de fixation 38 au support 10 de la tige de vérin 9. Le guide éjecteur 31 et la came 30 sont de préférence réalisés par découpage et pliage d'une seule tôle métallique en acier. Avantageusement, le chemin de guidage 32 et l'entretoise 37 peuvent être recouverts d'une plaque réalisée en une matière plastique à faible coefficient de frottement, par exemple du POM, surmoulée avec la plaque de base du guide éjecteur 31. Afin d'éviter tout risque de blocage de la fourche 26 du bras éjecteur 21 le long du chemin de came 32, les bords de ce dernier (ou de sa plaque le recouvrant au regard de la fourche) sont arrondis, par exemple selon un rayon de courbure d'environ 3 mm.

En fonctionnement, au démarrage d'un cycle de café, le guide éjecteur 31 et le bras éjecteur 21 se trouvent dans leurs positions initiales, notamment le guide éjecteur 31 est en position haute et le bras éjecteur 21 complètement à gauche du débouché 3, tel que représenté à la figure 1, la fourche 26 de ce dernier se trouvant sur la deuxième partie rectiligne 34 de la came 30. Le début du cycle commence par l'introduction du café moulu à l'intérieur de la chambre d'infusion 2 via la goulotte 15 du distributeur de mouture 14. Ensuite, en introduisant de l'eau dans le vérin hydraulique 8 via une pompe de la machine, l'ensemble formé par la tige de vérin 9, le support 10, le piston presseur 5 et le guide éjecteur 31 descend. Lors du début de la descente de cet ensemble, la came 30 du guide éjecteur 31, notamment la partie oblique 35 de la came, permet la rotation du bras éjecteur 21 complètement à droite sur la figure 1 par rapport au débouché 3 de la chambre 2. Le bras éjecteur 21 reste figé dans cette position lors de la fabrication du café, la fourche 26 se trouvant en prise avec la première partie rectiligne 33 de la came 30. Lorsque la fabrication du café est terminée, le vérin hydraulique 8 permet la remontée de l'ensemble, ainsi que la remontée du plateau expulseur à l'intérieur de la chambre d'infusion, sous l'action de la tige d'éjection 19, ce qui fait remonter la galette de marc 17 au niveau du débouché 3 de la chambre d'infusion 2. Dès que la galette de marc 17 est au niveau du débouché 3, la fourche 26 du bras éjecteur est actionnée par la partie oblique 35 de la came 30, ce qui a pour effet un mouvement de rotation rapide vers la gauche de la partie de raclage 27 du bras éjecteur 21 qui pousse ainsi la galette de marc vers un bac de récupération. Pendant l'opération de balayage du bras éjecteur, le piston expulseur reste dans la même position en partie haute de la chambre d'infusion et il ne descend que lorsque le balayage a été terminé. La machine est alors prête à recommencer un nouveau cycle de préparation de café.

D'autres variantes et modes de réalisation de l'invention peuvent être envisagés sans sortir du cadre de ses revendications.

Un tel dispositif d'expulsion à balayage peut également être utilisé pour l'éjection d'une capsule pré-conditionnée contenant du café ou un autre produit d'infusion, la capsule pouvant être du type rigide nécessitant une perforation en vue de l'infusion ou du type dosette souple en papier filtre.

## Revendications

1. Distributeur automatique de boissons infusées à partir de poudre de café ou de capsules pré-conditionnées comprenant, à l'intérieur d'un boîtier :
- un groupe d'infusion (1) comportant une chambre d'infusion (2) présentant un fond et un débouché (3) et étant apte à recevoir un piston presseur (5), des moyens d'actionnement (7) en un mouvement de coulissement relatif dudit piston presseur (5) et/ou de ladite chambre d'infusion (2) l'un par rapport à l'autre, à partir d'une position de repos dans laquelle le piston se trouve à l'extérieur de la chambre jusqu'à une position de travail à l'intérieur de la chambre d'infusion, et un plateau expulseur monté mobile dans ladite chambre d'infusion (2), entre le fond et le débouché (3) de cette dernière, au moyen d'un dispositif d'entraînement;
- ainsi qu'un dispositif d'expulsion (20) de galettes de marc ou de capsules infusées, lorsque ledit plateau expulseur est amené au niveau du débouché (3) de la chambre d'infusion (2), comportant un bras éjecteur (21) animé d'un mouvement alternatif au-dessus du débouché (3) de la chambre d'infusion (2), le bras éjecteur (21) est monté rotatif autour d'un axe de pivotement (24) perpendiculaire au plan du débouché (3) de la chambre d'infusion (2),
**caractérisé en ce que** le bras éjecteur (21) est entraîné dans son mouvement alternatif par une seule came (30) mobile avec le piston presseur (5) ou avec la chambre d'infusion (2) dont le profil est tel qu'elle assure le déplacement en double sens du bras éjecteur.

2. Distributeur selon la revendication 1, **caractérisé en ce que** la came (30) est solidaire du piston presseur (5) et vient en prise directement avec une extrémité d'entraînement (23) du bras éjecteur (21).

3. Distributeur selon la revendication 2, **caractérisé en ce que** l'axe de pivotement (24) du bras éjecteur (21) est adjacent à l'extrémité d'entraînement (23) dudit bras (21).

4. Distributeur selon l'une des revendications précédentes, **caractérisé en ce que** la came (30) est plate.

5. Distributeur selon la revendication 4, **caractérisé en ce que** la came (30) présente un chemin de guidage (32) composé de deux parties rectilignes (33,34) parallèles et reliées entre elles par une partie oblique (35) faisant un angle compris entre 40° et 60° avec lesdites parties rectilignes.

6. Distributeur selon la revendication 5, **caractérisé en ce que** le chemin de guidage (32) est une nervure sur laquelle se déplace une fourche (26) formant l'extrémité d'entraînement du bras éjecteur (21).

7. Distributeur selon la revendication 6, **caractérisé en ce que** la nervure est revêtue d'une plaque à arêtes arrondies réalisée en une matière plastique.

8. Distributeur selon l'une des revendications précédentes, **caractérisé en ce que** les moyens d'actionnement (7) du piston presseur (5) comprennent un vérin hydraulique (8) comportant une tige de vérin (9) munie à l'une de ses extrémités d'un support (10) qui porte ledit piston presseur (5) et la came (30).

9. Distributeur selon la revendication 8, **caractérisé en ce que** la came (30) est tenue au sein d'un guide éjecteur (31) fixé à l'une des extrémités du support (10) opposée à celle portant le piston presseur (5).

## Claims

1. An automatic dispenser of beverages brewed from coffee powder or from pre-packaged capsules, said automatic dispenser comprising, inside a housing:
• a brewing unit (1) comprising a brewing chamber (2) having a bottom and an outlet (3) and being suitable for receiving a presser piston (5), actuator means (7) for causing said presser piston (5) and said brewing chamber (2) to slide relative to each other, from a rest position in which the piston is situated outside the chamber to a working position in which the piston is situated inside the brewing chamber, and an expeller plate mounted to move in said brewing chamber (2) between the bottom and the outlet (3) of said brewing chamber, by being driven by a drive device; and
• an expeller device (20) for expelling cakes of grounds or for expelling brewed capsules, when said expeller plate is brought to the same level as the outlet (3) of the brewing chamber (2), which expeller device comprises an ejector arm (21) caused to sweep back and forth over the outlet (3) of the brewing chamber (2), the ejector arm (21) being mounted to pivot about a pivot axis (24) perpendicular to the plane of the outlet (3) of the brewing chamber (2);
said automatic distributor being **characterized in that** the ejector arm (21) is caused to sweep back and forth by a single cam (30) that is mounted to move with the presser piston (5) or with the brewing chamber (2) and that has a profile such that it causes the ejector arm to move in both directions.

2. A dispenser according to claim 1, **characterized in that** the cam (30) is secured to or integral with the presser piston (5) and comes directly into engagement with a drive end (23) of the ejector arm (21).

3. A dispenser according to claim 2, **characterized in that** the pivot axis (24) of the ejector arm (21) is adjacent to the drive end (23) of said arm (21).

4. A dispenser according any preceding claim, **characterized in that** the cam (30) is flat.

5. A dispenser according to claim 4, **characterized in that** the cam (30) has a guide path (32) made up of two parallel rectilinear portions (33, 34) that are connected together via a slanting portion (35) extending at an angle of in the range 40° to 60° relative to said rectilinear portions.

6. A dispenser according to claim 5, **characterized in that** the guide path (32) is a rib along which a fork (26) forming the drive end of the ejector arm (21) moves.

7. A dispenser according to claim 6, **characterized in that** the rib is covered with a plate that has rounded edges and that is made of a plastics material.

8. A dispenser according to any preceding claim, **characterized in that** the actuator means (7) for the presser piston (5) comprise a hydraulic actuator (8) having an actuator rod (9) provided at one of its ends with a support (10) that carries said presser piston (5) and the cam (30).

9. A dispenser according to claim 8, **characterized in that** the cam (30) is held within an ejector guide (31) that is fastened to that end of the support (10) that is opposite from the end thereof that carries the presser piston (5).

## Patentansprüche

1. Getränkeautomat für Brühgetränke aus Kaffeepulver oder vorbehandelten Kapseln, der innerhalb eines Gehäuses folgendes umfasst:
- Eine Brühgruppe (1) mit einer Brühkammer (2), die einen Boden und einen Auslass (3) aufweist und einen Druckkolben (5) aufnehmen kann, Mitteln (7) zum Betätigen des Druckkolbens (5) und/oder der Brühkammer (2) in einer Gleitbewegung relativ zueinander aus einer Ruhestellung, in welcher der Kolben sich außerhalb der Kammer befindet, bis zur einer Arbeitsstellung innerhalb der Brühkammer, und einer Auswerfplatte, die in der Brühkammer (2) zwischen dem Boden und dem Auslass (3) dieser Kammer mittels einer Mitnahmevorrichtung beweglich angebracht ist;
- sowie eine Vorrichtung (20) zum Auswerfen von zusammengepresstem Kaffeesatz oder gebrühten Kapseln, wenn die Auswerfplatte auf die Höhe des Auslasses (3) der Brühkammer (2) gebracht wird, die einen Auswerfarm (21) aufweist, der eine Hin- und Her-Bewegung über dem Auslass (3) der Brühkammer (2) ausführt, wobei der Auswerfarm (21) um eine Schwenkachse (24) drehbar angebracht ist, die senkrecht zur Ebene des Auslasses (3) der Brühkammer (2) ist,
**dadurch gekennzeichnet, dass** der Auswerfarm (21) in seiner Hin- und Her-Bewegung durch einen einzigen, mit dem Druckkolben (5) oder mit der Brühkammer (2) beweglichen Nocken (30) mitgenommen ist, dessen Profil derart gestaltet ist, dass er das Verschieben des Auswerfarms in doppelter Richtung gewährleistet.

2. Getränkeautomat nach Anspruch 1, **dadurch gekennzeichnet, dass** der Nocken (30) mit dem Druckkolben (5) fest verbunden ist und unmittelbar mit einem Mitnahmeende (23) des Auswerfarms (21) in Eingriff gelangt.

3. Getränkeautomat nach Anspruch 2, **dadurch gekennzeichnet, dass** die Schwenkachse (24) des Auswerfarms (21) an das Mitnahmeende (23) des Arms (21) angrenzend ist.

4. Getränkeautomat nach einem der vorhergehenden Ansprüche, **dadurch gekennzeichnet, dass** der Nocken (30) flach ist.

5. Getränkeautomat nach Anspruch 4, **dadurch gekennzeichnet, dass** der Nocken (30) einen Führungsweg (32) aufweist, der aus zwei geradlinigen Teilen (33, 34) besteht, die parallel und miteinander durch einen schrägen Teil (35) verbunden sind, der einen Winkel zwischen 40° und 60° mit den geradlinigen Teilen bildet.

6. Getränkeautomat nach Anspruch 5, **dadurch gekennzeichnet, dass** der Führungsweg (32) eine Rippe ist, an der sich eine Gabel (26) verschiebt, die das Mitnahmeende des Auswerfarms (21) bildet.

7. Getränkeautomat nach Anspruch 6, **dadurch gekennzeichnet, dass** die Rippe mit einer aus Kunststoff ausgeführten Platte mit abgerundeten Kanten verkleidet ist.

8. Getränkeautomat nach einem der vorhergehenden Ansprüche, **dadurch gekennzeichnet, dass** die Mittel (7) zum Betätigen des Druckkolbens (5) einen Hydraulikzylinder (8) umfassen, der eine Zylinderstange (9) aufweist, die an einem ihrer Enden mit einem Träger (10) versehen ist, der den Druckkolben (5) und den Nocken (30) trägt.

9. Getränkeautomat nach Anspruch 8, **dadurch gekennzeichnet, dass** der Nocken (30) innerhalb einer Auswerfführung (31) gehalten ist, die an einem der Enden des Trägers (10) befestigt ist, das demjenigen, das den Druckkolben (5) trägt, gegenüberliegt.
